# EUROPEAN PATENT SPECIFICATION

(11) **EP 1 479 947 B1**
(45) Date of publication and mention of the grant of the patent: **17.01.2007**
(21) Application number: 04252761.4
(22) Date of filing: 13.05.2004
(51) Int. Cl.: F16J 13/08, B65D 55/12, A47J 27/21, A47J 27/08

(54) **Lid for kitchen appliance**
Deckel für Küchengerät
Couvercle pour un appareil de cuisine

(30) Priority: 17.05.2003 GB 0311355
(43) Date of publication of application: 24.11.2004
(73) Proprietor: Kenwood Limited, Havant, Hampshire PO9 2NH (GB)
(72) Inventor: Weaden, Jamie, Southsea Hampshire P05 2BU (GB)
(74) Representative: Marsh, Robin Geoffrey

(56) References cited:
- CH-A- 176 778
- DE-A- 1 625 988
- DE-A- 3 312 786
- US-A- 5 148 938

## Description

This invention relates to lids for kitchen appliances, such as (by way of example only) lids for the goblets used with blending appliances and lids for electric kettles.

Whilst lids for such appliances operate in a fairly hostile environment, and are required to robustly fulfil certain important functions, including preventing expulsion of materials being mixed or blended from a container such as a goblet, in which the mixing or blending operation is being carried out by means of a motor-driven impeller, or resisting the effects of steam and high temperatures, in the case of kettles, they need to be constructed economically, bearing in mind the typical prices at which the kitchen appliances are sold, and made so that they can be readily cleaned.

It is also desirable, reflecting the likely principal usage of some such appliances for blending various ingredients, that measured amounts of certain ingredients may need to be added during a blending process. Furthermore, it is necessary that the lid be relatively easy to handle, in terms of its removal from and replacement on a goblet or other container with which it is associated.

The aim of the invention is to provide a lid for a kitchen appliance which addresses at least one of the above-mentioned criteria.

DE 33 12 786 A discloses a lid for pressure, vacuum or filter vessels, having a locking device in which radial locking bolts are driven outwardly into a locking position by means of a transmission system comprising co-operative gear-like components carried respectively upon each locking bolt and by a central actuating element that can be turned to progressively drive the bolts into their respective locking positions.

US-A-5 148 938 and DE 16 25 988 A show further relatively complex mechanisms for driving several locking arms or bolts radially outwards by means of a centrally-located actuator, thereby latching a lid or cover to a receptacle.

According to the invention from one aspect there is provided a lid for a vessel forming part of, or being associated with, a kitchen appliance; wherein said lid is formed with a recess and further comprises an actuator accommodated in the recess and capable of rotational movement therein relative to the lid; the lid further comprising a plurality of arm members each extending radially from the recess towards an edge of the lid and restraining means to constrain the arm members against motion in directions other than the radial direction, and characterised by the provision of a boss in said recess; the boss being formed with a plurality of apertures, each accommodating an inner end of a respective arm member; and by the actuator bearing a plurality of outstanding lugs, each capable, upon rotation of said actuator into a predetermined angular position relative to the lid, of engaging the inner end of a respective arm member through the corresponding aperture and of urging said arm member radially outwards; the arrangement thereby promoting interaction of the outer ends of said arm members with the vessel.

It is preferred that the restraining means includes (a) said boss and/or (b) a wall, dependent from the underside of the lid and disposed close to its edge, and formed with apertures to accommodate the outer ends of each of said arm members. The wall may conveniently support a part at least of a resilient seal effective between the lid and the vessel.

Preferably, the actuator comprises a receptacle such as a measuring bowl formed with a portion outstanding from the lid and capable of being grasped to facilitate manipulation thereof for removal and/or for actuating said arm members.

In some preferred embodiments of the invention, the actuator is supported in a through hole formed in said lid whereby, when said receptacle is removed, ingredients can be added to the vessel by way of said hole and without removing the lid.

It is further preferred that, where said actuator comprises a receptacle such as a measuring bowl, the receptacle is formed of translucent or transparent plastics material and bears markings indicative of frequently used ingredient volumes.

In a particularly preferred embodiment, the actuator is supported to the lid by means of a bayonet latching arrangement. Preferably in such circumstances, the latching arrangement provides for first, second and third stable rotational positions of the actuator relative to the vessel; the actuator being removable from the lid in the first position, latched to the lid in the second position and actuating the arm members in the third position.

In preferred embodiments, the actuator is formed with a plurality of lugs outstanding from an outer surface thereof; the recess of the lid being formed with a boss bearing a corresponding plurality of grooves to accommodate the lugs in said first position.

Preferably in such circumstances each groove communicates with a respective lip formed in the boss and extending circumferentially of the recess and with which a lug engages in said second and third positions.

Further preferably, the boss is apertured adjacent the lips to permit each of the lugs to engage, in said third position, an inner end of a respective radially extending arm member and to urge its respective arm member radially outwards relative to the boss.

Preferably, three lugs are provided, disposed equi-angularly around the actuator.

It is preferred that the outer end of each of the arm members is formed with a shoe portion adapted to bear upon an inner surface of a resilient seal disposed between the lid and the vessel.

The resilient seal is preferably formed of rubber or rubberised material disposed in a band surrounding the wall. Furthermore, it is preferred that the band is provided on an outer surface thereof (that facing the vessel in use) with relatively thin, flexible, blade-like protrusions running circumferentially thereof and capable of deflecting under the influence of the arm members in said third position to tighten the seal between the lid and the vessel.

The blade-like protrusions may advantageously be re-entrant into the vessel.

It is further preferred, with regard to said seal, that the band is formed integrally with a cover portion extending radially inwardly toward the boss and having an inner surface configured to engage a circumferentially extending recess in said boss, thereby to cover the arm members and to protect the moving parts of the lid against the ingress of unwanted materials such as comestibles or the like mixed or otherwise processed in the vessel, or other materials capable of impeding the correct operation of the lid.

According to the invention from another aspect there is provided a lid for a vessel forming part of, or being associated with, a kitchen appliance; wherein said lid is formed with a recess accommodating a removable receptacle usable as a measure for ingredients, and wherein sealing means is provided between said lid and said vessel, the said receptacle being manipulable relative to the lid either to unlatch it for removal therefrom or alternatively to actuate expander means to tighten the seal between the lid and the vessel.

In order that the invention may be clearly understood and readily carried into effect, one embodiment thereof will now be described, by way of example only, with reference to the accompanying drawings, of which:
Figure 1 shows, in perspective view, the underside of a lid in accordance with one example of this invention;
Figure 2 shows a plan view of the top of the lid illustrated in Figure 1;
Figure 3 shows a removable receptacle component of the lid;
Figure 4 shows a sealing member for use with the lid; and
Figure 5 shows the sealing member mounted to the underside of the lid.

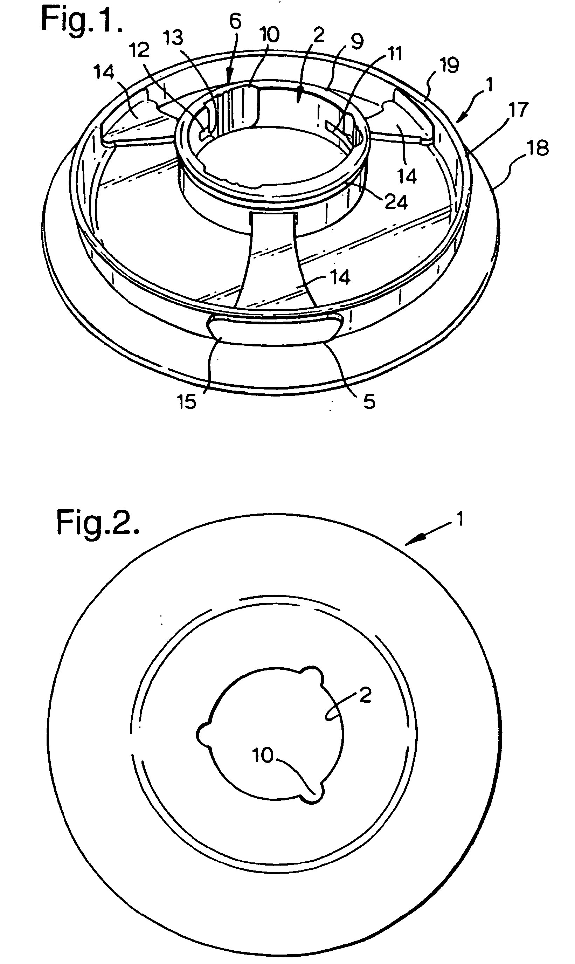

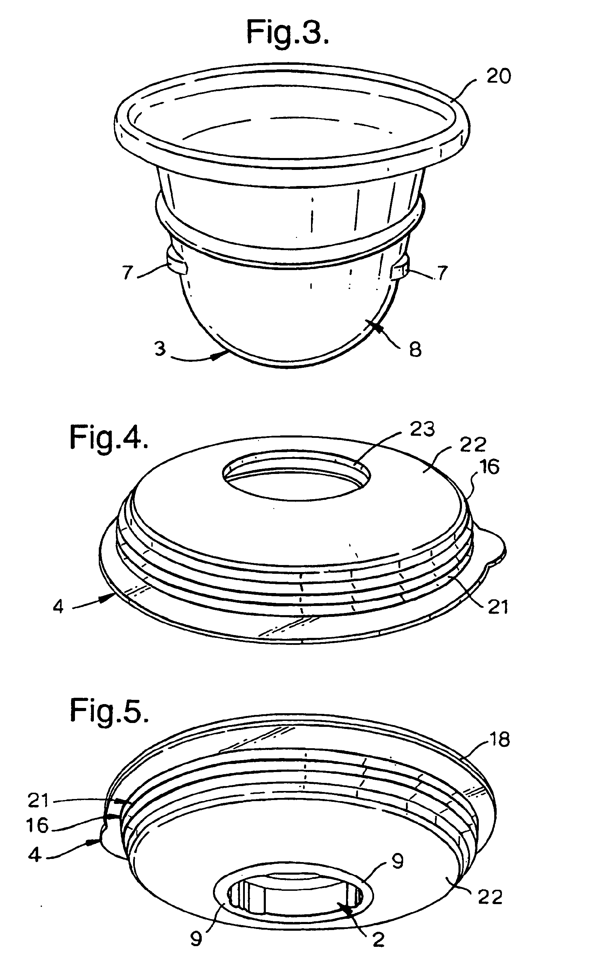

Referring now to the drawings, Figure 1 shows the underside of a lid in accordance with this example of the invention. The lid, generally shown at 1, is discoidal and intended for use with a vessel (not shown) of circular or conical profile which can be of any convenient construction and is intended to form part of, or to be associated with, a kitchen appliance (not shown). The lid and the vessel may of course adopt alternative configurations, such as ellipsoidal, if desired. In any event, the lid is formed with a recess 2 shaped and dimensioned to accommodate a manually operated actuator. In this example, the actuator conveniently takes the form of a removable component 3 comprising a receptacle (see Figure 3) suitable for use as a measure for ingredients. Sealing means generally shown at 4 (see Figures 4 and 5) is provided between the lid 1 and the vessel, and the receptacle 3 is manually operable, for example by turning it about a vertical axis relative to the lid, either to unlatch it for removal therefrom or alternatively to actuate expander means generally shown as 5 to tighten the seal between the lid and the vessel.

In a preferred arrangement, illustrated in Figure 1, the receptacle 3 is supported to the lid 1 by means of a bayonet latching arrangement, generally shown at 6, which provides for first, second and third stable rotational positions of the receptacle 3 relative to the lid 1; the receptacle 3 being removable from the lid 1 in the first position, latched to the lid 1 in the second position and actuating the expander means 5 in the third position.

In the example shown, the receptacle 3 is formed with a plurality of lugs such as 7 outstanding from an outer surface 8 thereof; the recess 2 being formed with a boss 9 bearing a corresponding plurality of grooves such as 10 to accommodate said lugs 7 in said first position.

Each groove 10 communicates with a respective lip such as 11 formed in the boss 9 and extending circumferentially of the recess 2 and with which a lug 7 engages in said second and third positions.

Further preferably, the boss 9 is apertured, as at 12, adjacent the lips such as 11 to permit each of the lugs 7 to engage, in said third position, an inner end 13 of a respective radially extending arm member 14 forming part of said expander means 5 and to urge its respective arm member radially outwards relative to the boss 9.

The outer end of each arm member 14 is formed with a shoe portion 15 adapted to bear upon the inner surface (not shown) of a resilient seal 16 (see Figures 4 and 5) disposed between the lid and the vessel and comprising part of the sealing means 4.

In this example, three lugs 7 are provided, although clearly two or more than three lugs and a corresponding plurality of associated arm members may be used if preferred. In general, however, especially for lids intended to be used with blenders and the like, it is preferred that the centres of the lugs are disposed at least substantially equi-angularly around the receptacle 3, as this configuration provides a balanced distribution of forces.

The lid 1 is formed with a dependent wall 17, coaxially surrounding the boss 9 and disposed near the edge 18 of the lid 1; the wall 17 being apertured, as at 19, to permit the outer ends of the radially extending arm members 14 to extend therethrough, and also supporting the resilient seal 16. It will be appreciated that the apertures 12 in boss 9 and 19 in the wall 17 serve to locate the inner and outer ends 13 and 15 of the arm members 14, and to constrain the arm members against motion in any direction other than radially of the lid 1.

The receptacle 3 usefully comprises a measuring bowl formed with a rim portion 20 outstanding from the lid and capable of being grasped to facilitate manipulation of the receptacle 3 for removal of the receptacle 3 from the lid and/or for actuating the arm members 14 of the expander means 5.

Conveniently, the aperture 2 comprises a through-hole in the lid 1; the receptacle 3 being removably supported therein such that, when the receptacle 3 is removed, ingredients can be added to the vessel by way of the hole and without removing the lid 1 from the vessel. Moreover, the receptacle 3 is conveniently formed of translucent or transparent plastics material bearing markings indicative of frequently used ingredient volumes.

The resilient seal 16 is preferably formed of rubber or rubberised material disposed in a band surrounding the wall. Furthermore, the band is provided on its outer surface (that facing the vessel in use) with a plurality (in this example three) of relatively thin, flexible, blade-like or fin-like protrusions 21 running circumferentially thereof and capable of deflecting under the influence of the arm members 14 in said third position to tighten the seal between the lid 1 and the vessel. The blade-like protrusions 21 may advantageously be shaped and/or formed so as to be re-entrant into the vessel.

With regard to the construction of the seal 16, the band is preferably formed integrally with a cover portion 22 extending radially inwardly toward the boss 9 and having an apertured inner surface 23 configured to engage a circumferentially extending recess 24 in the boss 9, thereby to cover the arm members 14 of the extender means 5 and to protect the moving parts of the lid 1 against the ingress of comestibles or the like mixed or otherwise processed in the vessel.

When configured for use with a kettle, it will be appreciated that the construction of the lid may be varied in several ways from that described in detail in relation to Figures 1 to 4 hereof. In particular, the actuator 3, though still mounted for rotation relative to the lid, is not generally removable therefrom, and provision is made for adequate sealing against the egress of steam from the rotary joint between the actuator and the remainder of the lid. Moreover, the actuator 3 can be shaped with (or carry) a graspable element such as a finial, ball or ring, for example that can be used not only to turn the actuator within its recess in the lid but also to bodily remove the lid from the kettle.

Furthermore, the resilient seal may be dispensed with in the case of a kettle lid, and the shoe portions 15 at the outer ends of the arm members 14 may be replaced with suitably shaped protruding tongues which are intended to co-operate with appropriately located and dimensioned apertures in the vessel body of the kettle itself to latch the lid to the vessel when the actuator is rotated to a chosen angular position within its recess in the lid. The angular disposition of the arms and thus the associated components may also vary from the equi-angular arrangement preferred for blenders and the like, in dependence on the layout of other components and the aesthetic design, as well as to ensure adequate safety and robustness of the latching operation.

Other variations and embodiments will be evident to those skilled in the art. Moreover it will be noted that a primary difference in lids provided in accordance with examples of the invention for benders and the like, on the one hand, and kettles and similar vessels on the other hand, resides in the interactions of the outer ends (15) of the arm members (14) with the vessel. In the case of blenders and the like, the arm members are used to distort or deflect a seal between the lid and the vessel, whereas in the case of kettles and the like, the arm members are configured to directly engage with slots or other receptors formed adjacent, or supported by, the upper rim of the vessel comprising the main kettle body.

## Claims

1. A lid (1) for a vessel forming part of, or being associated with, a kitchen appliance; wherein said lid is formed with a recess (2) and further comprises an actuator (3) accommodated in the recess (2) and capable of rotational movement therein relative to the lid (1); the lid further comprising a plurality of arm members (14) each extending radially from the recess (2) towards an edge (18) of the lid (1) and restraining means (9, 12, 17, 19) to constrain the arm members (14) against motion in directions other than the radial direction, and **characterised by** the provision of a boss (9) in said recess; the boss (9) being formed with a plurality of apertures (12), each accommodating an inner end (13) of a respective arm member (14); and by the actuator (3) bearing a plurality of outstanding lugs (7), each capable, upon rotation of said actuator (3) into a predetermined angular position relative to the lid (1), of engaging the inner end (13) of a respective arm member (14) through the corresponding aperture (12) and of urging said arm member (14) radially outwards; the arrangement thereby promoting interaction of the outer ends (15) of said arm members with the vessel.

2. A lid according to claim 1 wherein said boss (9) and the apertures (12) therein form part of said restraining means, and wherein said restraining means further includes a wall (17) dependent from the underside of said lid (1) and disposed close to its edge (18); the wall (17) being formed with apertures (19) to accommodate the outer ends of each of said arm members (14).

3. A lid according to any preceding claim wherein the outer end (15) of each of said arm members (14) is formed as a shoe portion adapted to bear upon an inner surface (23) of a resilient seal (4) disposed between the lid (1) and the vessel.

4. A lid according to claims 2 and 3 wherein the said wall (17) dependent from the underside of said lid (1)supports said resilient seal (4).

5. A lid according to claim 4 wherein the resilient seal (4) is formed of rubber or rubberised material disposed in a band (16) surrounding the wall (17).

6. A lid according to any of claims 3 to 5 wherein said resilient seal (4) is provided on an outer surface thereof (that facing the vessel in use) with relatively thin, flexible, blade-like protrusions (21) running circumferentially thereof and capable of deflecting in response to radially outward movement of said arm members (14) to tighten a seal between the lid (1) and the vessel.

7. A lid according to claim 6 wherein said blade-like protrusions (21) are re-entrant into the vessel.

8. A lid according to any of claims 3 to 7 wherein the said resilient seal (4) is formed integrally with a cover portion (22) configured and disposed to cover the arm members (14) and to protect the moving parts of the lid against the ingress of unwanted materials.

9. A lid according to any preceding claim wherein the actuator (3) is supported to the lid (1) by means of a bayonet latching arrangement (6).

10. A lid according to claim 9 wherein the latching arrangement (6) provides for first, second and third stable rotational positions of the actuator (3) relative to the lid (1); the actuator (3) being removable from the lid in the first position, latched to the lid in the second position and engaging the inner ends (13) of the respective arm members (14) in the third position.

11. A lid according to claim 10, wherein said restraining means includes said boss (9); the boss bearing a plurality of grooves (10), each positioned to accommodate a respective one of said lugs (7) in said first position, and wherein each groove (10) communicates with a respective lip (11), formed in said boss (9) and extending circumferentially of said recess (2), accommodating the respective lug (7) in said second and third positions.

12. A lid according to any preceding claim wherein said actuator (3) comprises a removable receptacle usable as a measure for ingredients, and wherein resilient sealing means (16) is provided between said lid (1) and said vessel, the said receptacle being manually rotatable relative to the lid either to unlatch it for removal therefrom or alternatively to actuate said arm members (14) to move them radially outwards of the lid and thereby tighten a seal, between the lid and the vessel, provided by the sealing means (16).

13. A lid according to claim 12 wherein the receptacle (3) comprises a measuring bowl formed with a portion outstanding from the lid and capable of being grasped to facilitate manipulation thereof for removal from said lid and/or for actuating said arm members (14).

14. A lid according to claim 12 or claim 13 wherein the recess (2) comprises a through hole formed in said lid (1) whereby, when said receptacle (3) is removed, ingredients can be added to the vessel by way of said hole and without removing the lid (1).

15. A lid according to any of claims 12 to 14 wherein said receptacle (3) is formed of translucent or transparent plastics material bearing markings indicative of ingredient volumes.

16. A lid according to any preceding claim wherein said lugs (7) are disposed equi-angularly around said actuator (3).

## Patentansprüche

1. Deckel (1) für einen Behälter, der ein Teil oder Zubehörteil einer Küchenmaschine darstellt, wobei der besagte Deckel mit einer Aussparung (2) ausgebildet ist und des weiteren ein Stellteil (3) aufweist, das in der Aussparung (2) angeordnet ist und in dieser eine Drehbewegung relativ zu dem Deckel (1) ausführen kann; der Deckel weist des weiteren eine Vielzahl von Armteilen (14) auf, die jeweils radial von der Aussparung (2) zu einem Rand (18) des Deckels (1) verlaufen, sowie Haltemittel (9, 12, 17, 19) zur Einschränkung einer Bewegung der Armteile (14) in anderen Richtungen als der Radialrichtung, und **gekennzeichnet durch** die Anordnung einer Nabe (9) in besagter Aussparung; die Nabe (9) ist mit einer Vielzahl von Öffnungen (12) versehen, jede für die Aufnahme eines inneren Endes (13) jedes Armteils (14); das Stellteil (3) weist eine Vielzahl von vorstehenden Ansätzen (7) auf, die jeweils in der Lage sind, beim Drehen des besagten Stellteils (3) in eine vorgegebene Winkellage relativ zu dem Deckel (1) das Innenende (13) eines gegebenen Armteils (14) **durch** eine entsprechende Öffnung (12) zu erfassen und das besagte Armteil (14) radial nach außen zu zwingen; so fördert die Anordnung das Zusammenwirken der Außenenden (15) der besagten Armteile mit dem Behälter.

2. Deckel gemäß Anspruch 1, bei dem die besagte Nabe und die Öffnungen (12) in ihnen Teile der besagten Haltemittel bilden und wobei besagte Haltemittel des weiteren eine von der Unterseite des besagten Deckels (1) abhängige und in dichter Nähe seines Randes (18) angeordnete Wand (17) aufweisen, wobei die Wand (17) mit Öffnungen (19) zur Aufnahme der Außenenden jedes der besagten Armteile (14) ausgeführt ist.

3. Deckel (1) gemäß einem beliebigen der vorhergehenden Ansprüche, bei dem das Außenende (15) jedes der besagten Armteile (14) als Gleitschuhteil ausgebildet ist, das gegen eine Innenfläche (23) einer nachgiebigen Dichtung (4) zwischen dem Deckel (1) und dem Behälter zu liegen kommt.

4. Deckel gemäß Anspruch 2 oder 3, bei dem die besagte, von der Unterseite des besagten Deckels (1) abhängige Wand (17) die besagte nachgiebige Dichtung (4) trägt.

5. Deckel gemäß Anspruch 4, bei dem die nachgiebige Dichtung (4) aus Gummi oder gummiertem Material geformt wird, das die Wand (17) in Form eines Bandes (17) umschließt.

6. Deckel gemäß einem beliebigen der Ansprüche 3 is 5, bei dem die besagte nachgiebige Dichtung (4) auf ihrer (im Gebrauch dem Behälter zugewandten) Außenfläche relativ dünne flexible, lamellenartige Vorsprünge (21) aufweist, die in seiner Umfangsrichtung verlaufen und in der Lage sind, sich bei einer radialen Bewegung der besagten Armteile (14) nach außen zu verformen, um eine feste Dichtung zwischen dem Deckel (1) und dem Behälter zu bewirken.

7. Deckel gemäß Anspruch 6, bei dem die besagten, lamellenartigen Vorsprünge (21) sich zurückfaltend im Behälter zu liegen kommen.

8. Deckel gemäß einem beliebigen der Ansprüche 3 bis 7, bei dem die besagte nachgiebige Dichtung (4) integrierend mit einem Abdeckteil (22) konfiguriert und so angeordnet ist, dass die Armteile (14) abgedeckt und die beweglichen Teile gegen das Eindringen von unerwünschtem Material geschützt sind.

9. Deckel gemäß einem beliebigen der vorhergehenden Ansprüche, bei dem sich das Stellteil (3) mittels einer Bajonettverriegelung (6) gegen den Deckel (1) abstützt.

10. Deckel gemäß Anspruch 9, bei dem die Verriegelung (6) eine stabile erste, zweite und dritte Drehposition des Stellteils (3) relativ zu dem Deckel (1) gewährleistet, wobei das Stellteil (3) in der ersten Position vom Deckel abnehmbar ist, in der zweiten Position mit dem Deckel verriegelt ist und in der dritten Position in die Innenenden (13) der jeweiligen Armteile (14) eingreift.

11. Deckel gemäß Anspruch 10, bei dem das besagte Haltemittel die besagte Nabe (9) aufweist, wobei die Nabe eine Vielzahl von Nuten (10) aufweist, die jeweils für die Aufnahme eines der besagten Ansätze (7) in der besagten ersten Position platziert sind, und wobei jede Nut (10) mit einer entsprechenden Nase (11) kommuniziert, die in der besagten Nabe (9) ausgebildet ist und in Umfangsrichtung der besagten Aussparung (2) verläuft und den jeweiligen Ansatz (7) in den besagten zweiten und dritten Positionen aufnimmt.

12. Deckel gemäß einem beliebigen der vorhergehenden Ansprüche, bei dem das besagte Stellteil (3) ein herausnehmbares Gefäß aufweist, das als Messbecher für Zutaten verwendet werden kann, und bei dem nachgiebige Dichtmittel (16) zwischen dem besagten Deckel (1) und dem besagten Behälter vorgesehen sind, wobei das besagte Gefäß von Hand relativ zu dem Deckel entweder zur Entriegelung vor dem Herausnehmen gedreht werden kann, oder aber für das Verstellen der besagten Armteile (14) vom Deckel weg radial nach außen, um damit ein festes Andrücken der durch das Dichtmittel (16) gebildeten Dichtung zwischen dem Deckel und dem Behälter zu bewirken.

13. Deckel gemäß Anspruch 12, bei dem das Gefäß (3) eine Messschüssel aufweist, die einen vom Deckel abstehendes Teil aufweist, der sich für eine erleichterte Betätigung zum Entfernen aus dem besagten Deckel und/oder das Stellen der besagten Armteile (14) fassen lässt.

14. Deckel gemäß Anspruch 12 oder Anspruch 13, bei dem die Aussparung (2) eine in dem besagtem Deckel (1) ausgebildete, durchgehende Öffnung aufweist, durch die beim Entfernen des besagten Gefäßes (3) Zutaten ohne Entfernen des Deckels (1) in den Behälter gegeben werden können.

15. Deckel gemäß einem beliebigen der Ansprüche 12 bis 14, bei dem das besagte Gefäß aus durchscheinendem oder transparentem Kunststoff und hergestellt ist und Markierungen aufweist, die Volumenangaben für Zutaten darstellen.

16. Deckel gemäß einem beliebigen der vorhergehenden Ansprüche, bei dem besagte Ansätze (7) in gleichen Winkelabständen um das besagte Stellteil herum angeordnet sind.

## Revendications

1. Couvercle (1) pour un récipient faisant partie d'un appareil de cuisine ou étant associé à celui-ci ; dans lequel ledit couvercle est réalisé avec un évidement (2) et comporte par ailleurs un actionneur (3) logé dans l'évidement (2) et capable de décrire un mouvement de rotation à l'intérieur de celui-ci par rapport au couvercle (1) ; le couvercle comportant par ailleurs une pluralité d'organes de type bras (14) chacun se prolongeant de manière radiale en provenance de l'évidement (2) vers un bord (18) du couvercle (1) et un moyen de retenue (9, 12, 17, 19) destiné à contraindre les organes de type bras (14) contre tout mouvement dans des directions autres que la direction radiale, et **caractérisé par** la mise en oeuvre d'un bossage (9) dans ledit évidement ; le bossage (9) étant réalisé avec une pluralité d'orifices (12), chacune logeant une extrémité intérieure (13) d'un organe de type bras respectif (14) ; et par l'actionneur (3) portant une pluralité de pattes en saillie (7), chacune capable sous l'effet de la rotation dudit actionneur (3) en une position angulaire prédéterminée par rapport au couvercle (1), d'engager l'extrémité intérieure (13) d'un organe de type bras respectif (14) au travers de l'orifice correspondant (12) et de solliciter ledit organe de type bras (14) de manière radiale vers l'extérieur ; l'assemblage encourageant de ce fait l'interaction des extrémités extérieures (15) desdits organes de type bras avec le récipient.

2. Couvercle selon la revendication 1, dans lequel ledit bossage (9) et les orifices (12) à l'intérieur de celui-ci font partie dudit moyen de retenue, et dans lequel ledit moyen de retenue comprend par ailleurs une paroi (17) dépendante du dessous dudit couvercle (1) et disposée à proximité de son bord (18) ; la paroi (17) étant réalisée avec des orifices (19) pour loger les extrémités extérieures de chacun desdits organes de type bras (14).

3. Couvercle selon l'une quelconque des revendications précédentes, dans lequel l'extrémité extérieure (15) de chacun desdits organes de type bras (14) est réalisée sous forme de portion de type patin adaptée pour venir s'appuyer sur une surface intérieure (23) d'un joint d'étanchéité élastique (4) disposé entre le couvercle (1) et le récipient.

4. Couvercle selon l'une quelconque des revendications 2 et 3, dans lequel ladite paroi (17) dépendante du dessous dudit couvercle (1) supporte ledit joint d'étanchéité élastique (4).

5. Couvercle selon la revendication 4, dans lequel le joint d'étanchéité élastique (4) est réalisé à partir d'une matière en caoutchouc ou caoutchoutée disposée en une bande (16) entourant la paroi (17).

6. Couvercle selon l'une quelconque des revendications 3 à 5, dans lequel ledit joint d'étanchéité élastique (4) est mis en oeuvre sur une surface extérieure de celui-ci (celle faisant face au récipient utilisé) avec des protubérances relativement fines et flexibles en forme de lames (21) se répartissant sur la circonférence de celle-ci et capables de fléchir en réaction à tout mouvement de manière radiale vers l'extérieur desdits organes de type bras (14) afin de serrer un joint d'étanchéité entre le couvercle (1) et le récipient.

7. Couvercle selon la revendication 6 dans lequel lesdites protubérances en forme de lames (21) sont rentrantes dans le récipient.

8. Couvercle selon l'une quelconque des revendications 3 à 7, dans lequel ledit joint d'étanchéité élastique (4) est réalisé de manière intégrale avec une portion de type obturateur (22) configurée et disposée pour recouvrir les organes de type bras (14) et pour protéger les pièces en mouvement du couvercle contre la pénétration de matières indésirables.

9. Couvercle selon l'une quelconque des revendications précédentes, dans lequel l'actionneur (3) est supporté sur le couvercle (1) par le biais d'un assemblage de verrouillage à baïonnette (6).

10. Couvercle selon la revendication 9, dans lequel l'assemblage de verrouillage (6) procure une première, une deuxième et une troisième positions de rotation stables de l'actionneur (3) par rapport au couvercle (1) ; l'actionneur (3) étant détachable du couvercle dans la première position, verrouillé sur le couvercle dans la deuxième position et engageant les extrémité intérieures (13) des organes de type bras respectifs (14) dans la troisième position.

11. Couvercle selon la revendication 10, dans lequel ledit moyen de retenue comprend ledit bossage (9) ; le bossage portant une pluralité de rainures (10), chacune positionnée pour loger une patte respective desdites pattes (7) dans ladite première position, et dans lequel chaque rainure (10) communique avec une lèvre respective (11), réalisée dans ledit bossage (9) et se prolongeant sur la circonférence dudit évidement (2), logeant la patte respective (7) dans ladite deuxième position et dans ladite troisième position.

12. Couvercle selon l'une quelconque des revendications précédentes, dans lequel ledit actionneur (3) comporte un réceptacle amovible servant de mesure pour les ingrédients, et dans lequel le moyen d'étanchéité élastique (16) est mis en oeuvre entre ledit couvercle (1) et ledit récipient, ledit réceptacle pouvant être tourné à la main par rapport au couvercle soit pour le déverrouiller de celui-ci soit comme autre possibilité pour actionner lesdits organes de type bras (14) pour les déplacer de manière radiale vers l'extérieur par rapport au couvercle et de ce fait serrer un joint d'étanchéité, entre le couvercle et le récipient, mis en oeuvre par le moyen d'étanchéité (16).

13. Couvercle selon la revendication 12, dans lequel le réceptacle (3) comporte un bol gradué réalisé avec une portion en saillie par rapport au couvercle et capable d'être saisi pour faciliter la manipulation de celui-ci afin de le retirer dudit couvercle et/ou afin d'actionner lesdits organes de type bras (14).

14. Couvercle selon la revendication 12 ou la revendication 13, dans lequel l'évidement (2) comporte un trou traversant réalisé dans ledit couvercle (1) ce par quoi, quand ledit réceptacle (3) est retiré, des ingrédients peuvent être ajoutés dans le récipient par le biais dudit trou et ce, sans avoir à retirer le couvercle (1).

15. Couvercle selon l'une quelconque des revendications 12 à 14, dans lequel ledit réceptacle (3) est réalisé à partir d'une matière plastique translucide ou transparente portant des marques indiquant des volumes d'ingrédients.

16. Couvercle selon l'une quelconque des revendications précédentes, dans lequel lesdites pattes (7) sont disposées de manière équiangulaire autour dudit actionneur (3).
